# EUROPEAN PATENT APPLICATION

(11) **EP 0 549 170 A1**
(43) Date of publication of application: **30.06.1993**
(21) Application number: 92311115.7
(22) Date of filing: 07.12.1992
(51) Int. Cl.: G03B 17/26, G21F 5/00

(54) **Container for storing a highly photosensitive material**

(30) Priority: 26.12.1991 JP 345253/91
(71) Applicant: KONICA CORPORATION, Tokyo 163 (JP)
(72) Inventor: Kimura, Toshihiko, c/o Konica Corporation, Hino-shi, Tokyo (JP); Kasamatsu, Tomomichi, c/o Konica Corporation, Hino-shi, Tokyo (JP); Iwagaki, Masaru, c/o Konica Corporation, Hino-shi, Tokyo (JP)
(74) Representative: Ben-Nathan, Laurence Albert

(57) **Abstract**

A container for storing a highly photosensitive material, provided with an air vent passage through which air proceeds between the outside and the inside of the container, comprises an air passage member disposed in the air vent passage to form the air vent passage in such manner that radiant rays proceeding to the inside of said container is reflected at least once on the internal wall of the air vent passage.

## Description

### BACKGROUND OF THE INVENTION

The present invention relates to a container for storing a highly photosensitive material. More specifically, the invention relates to a container with an air hole for storing a highly photosensitive material which has a structure for protecting a photosensitive material from direct exposure of natural radiant rays.

Highly photosensitive materials are useful materials used in various fields including photographic film. However, there is a disadvantage in highly photosensitive materials that it is difficult to storage them because they are often degraded or aged by exposure to light. Therefore, it is extremely essential to storage photosensitive materials in such a good state for a target period that they are protected from degradation and aging due to exposure to light and it is an important problem to achieve such a purpose.

The main cause of degradation and aging during storage of photosensitive materials is exposure to natural radiant rays existing in the air. There are two types of natural radiant rays, cosmic rays and radiant rays caused by radioisotopes. Cosmic rays include primary cosmic rays and secondary cosmic rays.

Primary cosmic rays are cosmic rays radiated from the cosmos which have a high energy portion (1 to 10²⁰ MeV) caused by the galactic system and a low energy portion (1 to several hundreds MeV) caused by the sun.

Secondary cosmic rays are secondary corpuscular rays generated when primary cosmic rays collide with air, which are, for example, electrons, positive electrons, pions, muons, neutrinos, gamma rays (high energy), and neutron rays. Among them, corpuscular rays which affect photosensitive materials are neutron rays and gamma rays. Cosmic rays including gamma rays are radiated mainly from the upper part.

Radiant rays caused by radioisotopes mentioned above are radiant rays which exist naturally or independently or radiant rays which are caused by radioisotopes existing in a human body.

Radioisotopes existing naturally are Ra-226, Rn-222, U-233, and Th-232 existing in disintegration series such as the uranium series, actinium series, and thorium series which exist in rocks and soil on the ground in a small amount. Radiant rays caused by the above radiosiotopes are alpha rays, beta rays, and gamma rays.

Radioisotopes existing independently are K-40, Rb-87, Lu-176, and C-40. Among them, K-40 exists in a human body and radiates beta rays and gamma rays.

Among the above radioisotopes, radiant rays which affect photosensitive materials are gamma rays, which are radiated mostly from the human body.

To protect highly photosensitive materials from nature radiant rays (particularly gamma rays) mentioned above, it is essential to prepare a storage container with a suitable thickness which is made of a suitable shielding material.

However, to store photosensitive materials in a good state for a long period of time, it is not sufficient enough only to prevent natural radiant rays as mentioned above and it is also required to suitably maintain the storage conditions such as temperature and humidity. Therefore, the storage container requires an air hole for adjusting the temperature and humidity in the container.

The air hole of a conventional storage container has not been studied thoroughly from a view point of shielding of natural radiant rays. For example, the air hole is cylindrical and even if the storage container is sufficiently thick, natural radiant rays come in the container directly from the air hole and a photosensitive material is exposed to them and degraded. Therefore, a conventional storage container having such an air hole as mentioned above cannot store photosensitive materials for a long period of time. Furthermore, recent photosensitive materials become much more sensitive and degradation of photosensitive materials in storage containers during storage is a serious problem.

The object of the present invention is to solve the above problem, that is, to provide a storage container for storing highly photosensitive materials for a long period of time.

### SUMMARY OF THE INVENTION

The container of the present invention for storing highly photosensitive materials which is designed to solve the above problem has an air hole including an inner wall for reflecting all natural radiant rays coming from the outer opening of the air hole at an arbitrary angle at least once and the shortest distance when the natural radiant rays pass through the container wall is a practical length which is long enough to shield the natural radiant rays.

The operation of the aforementioned container for storing highly photosensitive materials will be explained hereunder.

According to the present invention, when natural radiant rays which come in from the outer opening of the air hole come out into the container from the inner opening, the natural radiant rays are always reflected off of the inner wall of the air hole at least once, so that the energy of natural radiant rays such as gamma rays having high energy attenuates.

The energy of natural radiant rays, for example, of gamma rays of several MeV attenuates to about 1/5 by one reflection. Therefore, since the air hole is structured so that incident natural radiant rays reflect at least once regardless of the inner shape thereof, highly photosensitive materials are protected from degradation and aging due to exposure to natural radiant rays.

Furthermore, according to the present invention, the wall of the storage container is so thick that the shortest distance when natural radiant rays pass through the wall of the storage container is a practical length which is long enough to shield the natural radiant rays. Therefore, when the natural radiant rays radiated to the storage container reach inside the storage container, they become a sufficiently weak natural radiation quantity.

As a result, when highly photosensitive materials are stored in the container of the present invention for storing highly photosensitive materials, they can be stored without being exposed to natural radiant rays for a long period of time.

The aforementioned practical length is the distance when natural radiant rays pass through the walls of a storage container. For example, natural radiant rays interpenetrate the wall of the storage container from the outer surface thereof, come out into the air hole, cross inside the air hole, interpenetrate the inner wall of the storage container from the inner wall of the air hole once again, and come out into the storage container. In such a passing-through path of natural radiant rays, the aforementioned practical length is the sum of the length of the passing-through path from the outer surface of the storage container to the inner wall of the air hole and the length of the passing-through path from the inner wall of the air hole to the inner wall of the storage container. When natural radiant rays come in from the outer surface of the storage container, come out from the inner wall of the air hole, cross inside the air hole, come out from another wall of the air hole, pass through inside the air hole, and then reach inside the storage container, the practical length is the sum of the length of the passing-through path from the outer surface of the storage container to the inner wall of the air hole and the length from the inner wall of the air hole from which the natural radiant rays come in to the inner wall of the air hole from which the natural radiant rays radiate. Such a shortest passing distance of natural radiant rays when they pass through the wall of the storage container is referred to as a practical length. The concrete value of this practical length varies with the material constructing the storage container.

As to the wall of the storage container, the practical length of each member constructing the storage container is taken into account.

### BRIEF DESCRIPTION OF THE DRAWINGS

Fig. 1 is a diagram for explaining the structure and principle of the present invention.

Fig. 2 is an illustration showing the status when the structure of the present invention is not satisfied.

Fig. 3 is an illustration showing an embodiment of the container of the present invention for storing highly photosensitive materials.

Fig. 4 is a side view of another embodiment of the container of the present invention for storing highly photosensitive materials.

Fig. 5 is a front view showing the front of the container for storing highly photosensitive materials shown in Fig. 4.

Fig. 6 is an illustration showing a further embodiment of the container of the present invention for storing highly photosensitive materials.

### DETAILED DESCRIPTION OF THE PREFERRED EMBODIMENTS

Next, embodiments of the container for storing highly photosensitive materials relating to the present invention will be explained with reference to the accompanying drawings.

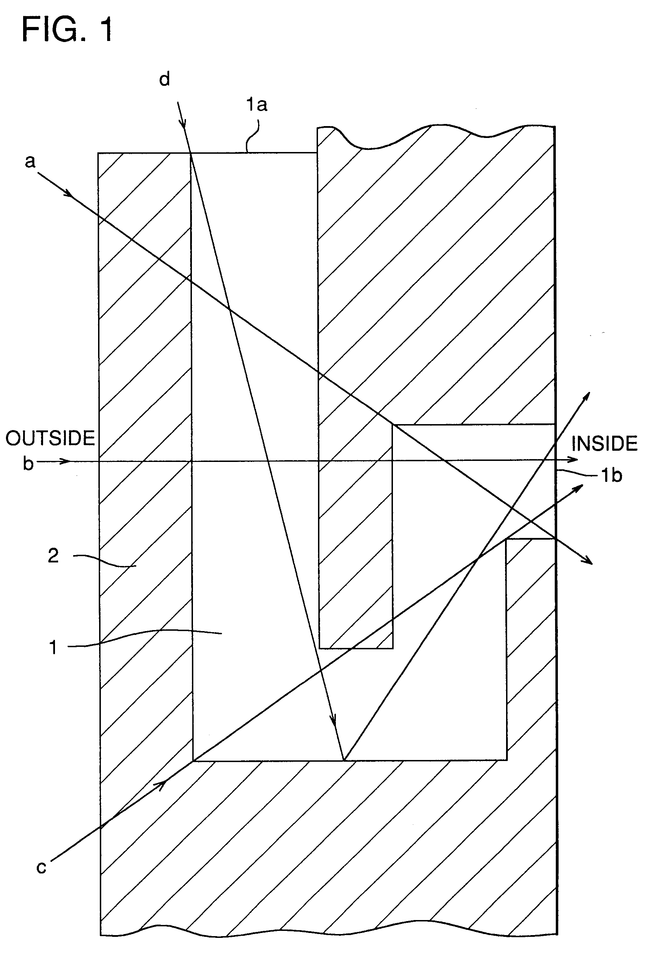

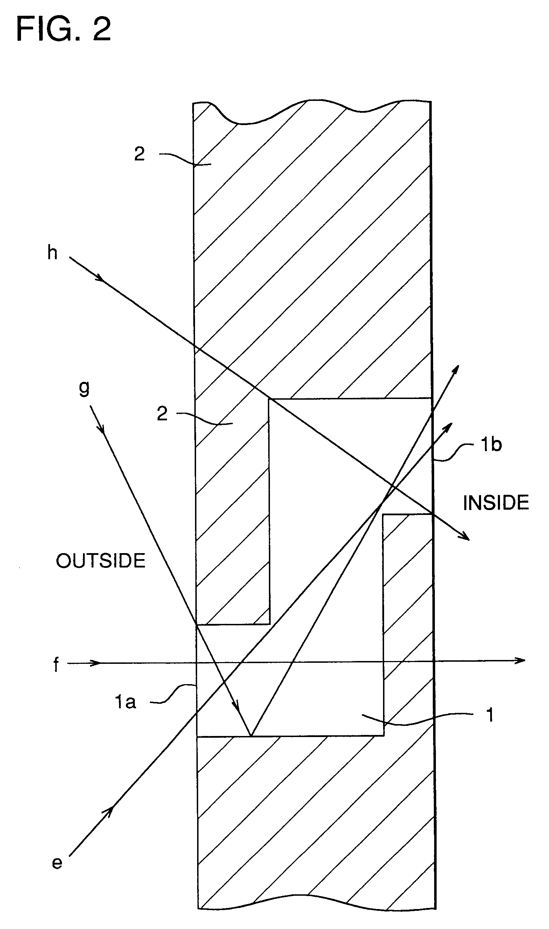

Figs. 1 and 2 are illustrations for showing the principle of the present invention. The symbols used in both Figs. 1 and 2 are all common. A highly photosensitive material is stored at the location with a marking of "Inside" shown in the drawing.

The storage container of the present invention will be explained hereunder.

In Fig. 1, numeral 2 indicates a storage container and 1 an air hole which is installed at a suitable location of the storage container.

As shown in Fig. 1, according to the present invention, when the air hole 1 passes through the storage container 2 from an outer opening 1a thereof to an inner opening 1b thereof and the air hole is structured so that natural radiant rays which come in from the outer opening 1a of the air hole 1 at an arbitrary angle are reflected off of the inner wall of the air hole 1 at least once and then come out from the inner opening 1b of the air hole 1, there is no special restriction on the shape of the air hole.

To determine the inner shape of the air hole, it is desirable to draw a sectional view of the container having the air hole and to study whether an arbitrary straight line which comes in from the outer opening of the air hole touches any inner wall of the air hole.

For example, as shown in Fig. 1, a straight line d comes in from the outer opening 1a of the air hole 1, is reflected off of the inner wall of the air hole 1 once, and then comes out from the inner opening 1b into the storage container. Therefore, it may be said that the air hole 1 having, for example, the shape shown in Fig. 1 is the air hole specified by the present invention. On the other hand, the air hole 1 shown in Fig. 2 has an inner shape that the section from the outer opening 1a thereof to the inner opening 1b is in the shape of a crank. However, a straight line e passes through the air hole from the outer opening 1a to the inner opening 1b without being reflected off of the inner wall of the air hole 1. Therefore, a storage container having the air hole 1 shown in Fig. 2 is not the storage container specified by the present invention.

As mentioned above, whether a storage container has an air hole specified by the present invention or not can be easily determined by a drawing, for example, a sectional view showing the air hole. Furthermore, by studying the air hole specified the present invention on a drawing, it can be designed easily.

In the storage container of the present invention, the shortest distance when natural radiant rays pass through the wall of the storage container is adjusted to a practical length which is long enough to shield the natural radiant rays. For example, in an air hole in the shape shown in Fig. 1, the shortest passing distance in the wall of the storage container among natural radiant rays indicated by straight lines a, b, and c is the distance of the natural radiant rays indicated by the straight line c. The shortest distance when the natural radiant rays indicated by the straight line c pass through the storage container is the sum of the length from the outer surface of the storage container where the natural radiant rays come in slantwise to the inner wall of the air hole from where the natural radiant rays come out and the length from the inner wall of the air hole where the natural radiant rays come in slantwise to the inner wall of the air hole from where the natural radiant rays come out slantwise. The natural radiant rays passing distance which is the sum of lengths is determined so that the natural radiant rays attenuate according to the material of the storage container.

The shortest passing distance can be determined easily on a design drawing of the storage container when the material of the storage container is determined.

As a material of the storage container, a metal such as iron or lead or a radiation shielding substance for effectively shielding radiant rays can be selected properly.

The storage container may be made from not only one of the aforementioned substances but also a plurality of substances according to the shape and function of the storage container.

### Embodiment 1

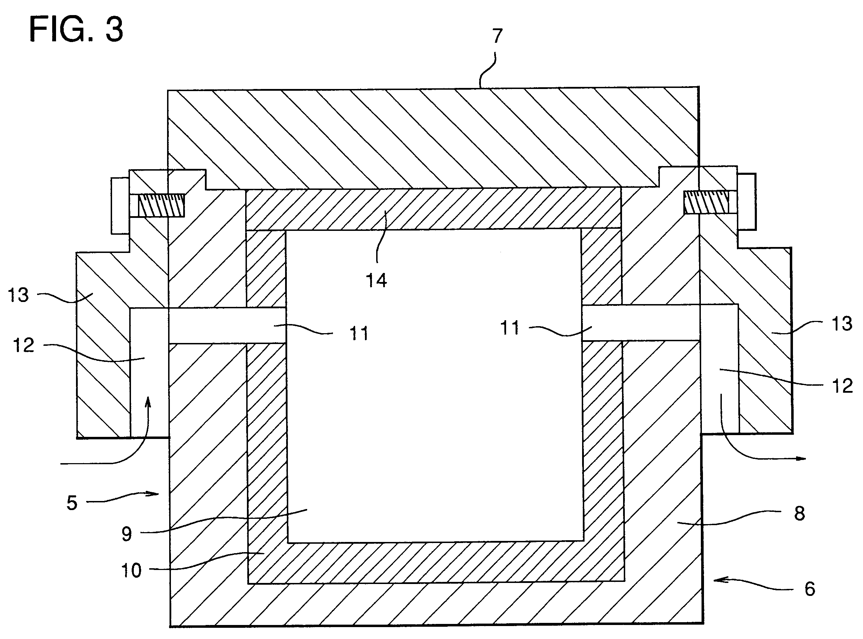

Fig. 3 is a sectional view of the storage container of the present invention.

A storage container 5 shown in Fig. 3 has a container body 6 and a cover member 7. The container body 6 includes a box type lead container body 8 with an opening on the top and an inner storing chamber 9 between which a heat insulating material 10 is filled and a through hole 11 passing from the outer surface of the box type container body 8 to the inner storing chamber 9. To the outer opening of the through hole 11, a scattering protector 13 is mounted so as to cover the outer opening of the through hole 11 and to form a groove 12 which is led from the outer opening to the outside. The cover member 7 covers the opening of the aforementioned box type container body 8 and has a heat insulating material 14 at the bottom thereof. In this storage container 1, the above groove 12 and through hole 11 form an air hole.

This storage container is arranged in a room wherein the temperature and humidity are adjusted and air with adjusted temperature and humidity can be introduced into the inner storing chamber 9 via the above groove 12 and through hole 11.

The length of the groove 12 of the scattering protector 13, the diameter of the opening of the groove 12, and the diameter and through length of the through hole 11 are set so that natural radiant rays coming in the opening of the groove 12 at an arbitrary angle can be reflected off of the inner wall of the air hole at least once. The thickness of the box type container body 8 is set so that natural radiant rays radiated from an arbitrary direction are sufficiently shielded. The thickness of the scattering protector 13 for covering the opening of the through hole 11 in the axial direction of the above through hole 11 is also set so that natural radiant rays are sufficiently shielded.

The end face of the cover member 7 in the longitudinal direction is designed so as to rotate. When the cover member 7 for covering the top of the box moves horizontally, the end face in the longitudinal direction thereof leaps up so that the cover member 7 can move smoothly in the horizontal direction.

In the storage container 1 for highly photosensitive materials shown in Fig. 3, highly photosensitive materials are not exposed to natural radiant rays, so that they are not degraded or aged within the storage container 1 and the storage conditions including temperature and humidity can be controlled suitably. Therefore, highly photosensitive materials can be stored for a long period of time.

### Embodiment 2

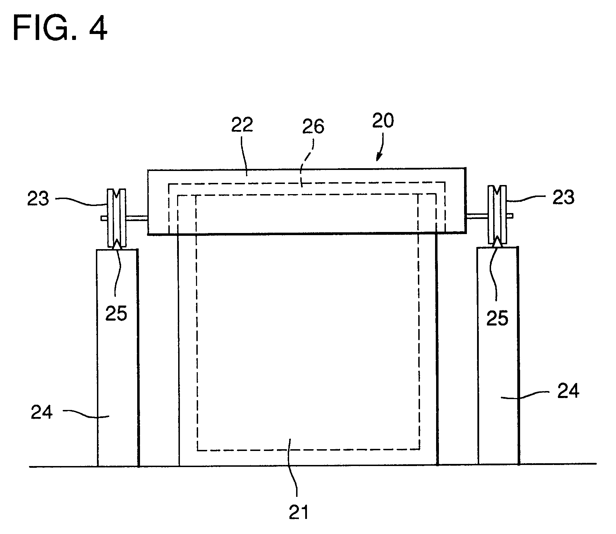

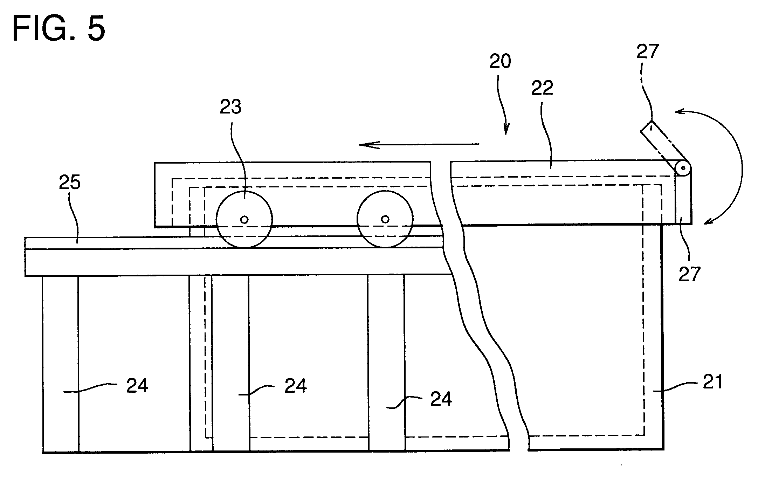

Figs. 4 and 5 are illustrations showing a storage container of another embodiment of the present invention.

As shown in the drawings, this storage container 20 has an almost rectangular prism box 21 with an opening at the top and a cover member 22 for covering the top opening of the box 21. This cover member 22 has an opening with an area larger than that of the top surface of the box 21 which looks downward. A plurality of wheels 23 which are mounted to shafts protruded on both sides of the cover member 22 so as to rotate freely move on rails 25 supported by a plurality of supports 24 installed on both sides of the above box 21, so that the cover member 22 can cover or open the opening of the above box 21. When the cover body 21 covers the opening of the above box 21, a gap 26 is generated between the box 21 and the cover member 22. This gap 26 is the air hole of the present invention. According to this embodiment, the box 21 and cover member 22 are designed so that when natural radiant rays coming into the above gap 26 pass through the gap, the natural radiant rays are reflected off of the surface of the box 21 or cover member 22 at least once. Furthermore, the box 21 and cover member 22 are so thick as to sufficiently shield natural radiant rays traveling from an arbitrary direction.

As shown in Figs. 4 and 5, an end face 27 of the above cover member 22 in the traveling direction is designed to rotate so that when the cover member 22 moves, it is not caught by the box 21.

In the storage container for highly photosensitive materials shown in Figs. 4 and 5, highly photosensitive materials are not exposed to natural radiant rays, so that they are not degraded or aged within the storage container and the storage conditions including temperature and humidity can be controlled suitably. Therefore, highly photosensitive materials can be stored for a long period of time.

### Embodiment 3

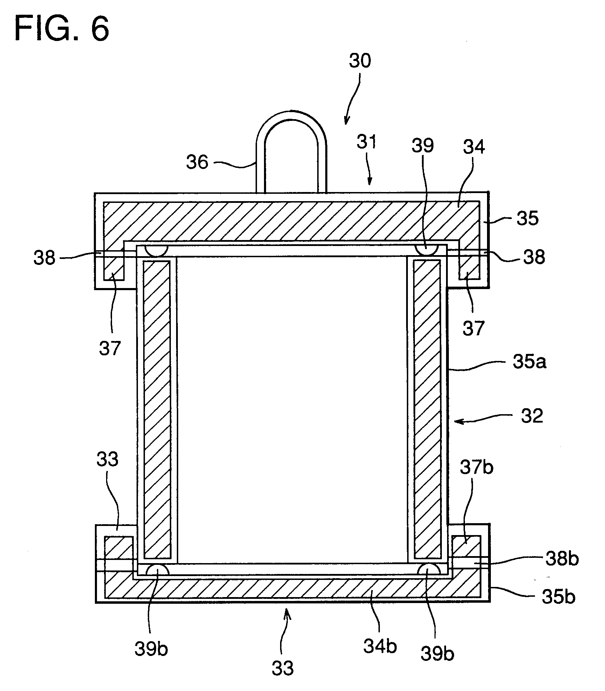

Fig. 6 shows another example of the container of the present invention for storing highly photosensitive materials which is stored in a refrigerator.

As shown in Fig. 6, this container 30 for storing highly photosensitive materials is formed comparatively compact. This container 30 for storing highly photosensitive materials is composed of a cover member 31, a cylindrical member 32 with a square horizontal section, and a bottom member 33.

This cover member 31 is formed of a radiation shielding substance 34 and the surface thereof is coated with plastics 35. A handle 36 is mounted to the top of the cover member 31. At the edge of the bottom of the cover member 31, a rim 37 which is larger in diameter than the above cylindrical member 32 is protruded and formed. A plurality of horizontal through holes 38 are made in this rim 37. Furthermore, a plurality of projections 39 which come in contact with the top end face of the cylindrical member 32 when the cover member 31 is mounted to the cylindrical member 32 are formed on the bottom of the cover member 31. Each projection 39 is formed at the location corresponding to the inner opening of each through hole 38 mentioned above and the projections are formed at intervals with each other.

In the same way as with the above cover member 31, the cylindrical member 32 is formed of a radiation shielding substance 34a and the surface thereof is coated with plastics 35a.

In the same way as with the above cover member 31, the bottom member 33 is formed of a radiation shielding substance 34b and the surface thereof is coated with plastics 35b. Furthermore, at the edge of the top thereof, a rim 37b which is larger in diameter than the above cylindrical member 32 is protruded and formed. A plurality of horizontal through holes 38b are made in this rim 37b. Furthermore, a plurality of projections 39b which come in contact with the bottom end face of the cylindrical member 32 when the bottom member 33 is mounted to the cylindrical member 32 are formed on the bottom of the cover member 31. Each projection 39b is formed at the location corresponding to the inner opening of each through hole 38b mentioned above and the projections 39b are formed at intervals with each other.

In the container 30 for storing highly photosensitive materials having the above structure, the cover member 31 is mounted so as to cover the top opening of the cylindrical member 32 and the top of the bottom member 33 is mounted so as to cover the bottom opening of the cylindrical member 32. By doing this, the projections come in contact with the top end face of the cylindrical opening. Since each projection is opposite to the inner opening of each horizontal through hole mentioned above, radiant rays coming into the outer opening of each through hole always comes in contact with the corresponding projection and is reflected. The reflected radiant rays reflect variously by striking on the inner wall of the rim of the cover member and attenuate finally. Since the projections are formed at intervals with each other, the outside is connected with the storage container by the intervals of the aforementioned through holes and the intervals of the projections and outside conditioned air can be introduced into this storage container.

The relationship between the bottom member and cylindrical container is the same as the relationship between the above cover member and cylindrical container.

The storage container 30 is structured so that it can be opened or closed by the handle 36, and the cover member 31 and cylindrical member 32 can be separated from each other, and furthermore, the cylindrical member 32 and bottom member 33 can be separated from each other. The reason that the storage container is structured so that not only the cover member 31 but also the cylindrical member 32 and bottom member 33 can be separated is that the aforementioned structure can be handled conveniently. Gaps are formed between the cover member 31, cylindrical member 32, and bottom member 33 by the projections 39 or 39b respectively, so that highly photosensitive materials can be stored under the same condition as that in a refrigerator. Furthermore, since natural radiant rays coming into the through holes 38 or 38b are shielded by the projections 39 or 39b, inside photosensitive materials will not be exposed directly to natural radiant rays.

According to the above storage container, highly photosensitive materials can be stored for a long period of time due to no exposure to natural radiant rays. This storage container can be placed in the aforementioned air-conditioned room.

The aforementioned structure of the present invention can shield any natural radiant rays coming in from an arbitrary direction, so that highly photosensitive materials can be stored in a good state for a long period of time free of degradation and aging due to exposure to natural radiant rays.

## Claims

1. A container for storing a highly photosensitive material, comprising:
means for constructing the external appearance of said container, said constructing means including a floor member, a side wall member and a ceiling member so as to enclose the inside of said container, said constructing means provided with an air vent passage through which air proceeds between the outside and the inside of said container; and
an air passage member disposed in said air vent passage to form said air vent passage in such manner that radiant rays proceeding to the inside of said container is reflected at least once on the internal wall of said air vent passage, wherein the smallest one of the sums of the thickness of said constructing member and the thickness of said air passage member both residing on each of possible straight ways connecting between the outside and the inside of said container is arranged to be a sufficient thickness to prevent said radiant rays from passing through said container along said straight way corresponding to said smallest sum.

2. The container of claim 1, wherein said side wall member is provided with an air vent hole used as said air vent passage and said air passage member is attached to said side wall member so as to form an additional air vent passage between said air passage member and said side wall member.

3. The container of claim 1, wherein said side wall member and said floor member form a box-like container having an open top and said ceiling member forms a cover which is detachablly mounted on said box-like container so as to cover said open top, and wherein said air vent passage is provided between said cover and the top of said side wall member and said air passage member is attached to said cover so as to form an additional air vent passage between said air passage member and said side wall member.

4. The container of claim 1, wherein said side wall member forms a cylinder and said ceiling member forms a disk cover having a diameter larger than that of said cylinder, and wherein said air vent passage is provided between said disk cover and the top of said side wall member and said air passage member is attached to said disk cover in the form of a rim so as to form an additional air passage between said air passage member and said side wall member.

5. The container of claim 4, wherein said rim-like air passage member is provided with an air vent hole, and a projection member is provided at a position corresponding to the position of said air vent hole so that radiant rays coming from said air vent hole are reflected by said projection member.

6. The container of claim 5, wherein said projection member is provided to the top of said side wall member.

7. The container of claim 1, wherein said side wall member forms a cylinder and said floor member forms a disk having a diameter larger than that of said cylinder, and wherein said air vent passage is provided between said disk and the bottom of said side wall member and said air passage member is attached to said disk in the form of a rim so as to form an additional air passage between said air passage member and said side wall member.

8. The container of claim 7, wherein said rim-like air passage member is provided with an air vent hole, and a projection member is provided at a position corresponding to the position of said air vent hole so that radiant rays coming from said air vent hole are reflected by said projection member.
